# EUROPÄISCHE PATENTANMELDUNG

(11) **EP 3 323 492 A1**
(43) Veröffentlichungstag der Anmeldung: **23.05.2018**
(21) Anmeldenummer: 17180449.5
(22) Anmeldetag: 10.07.2017
(51) Int. Cl.: B01D 45/12, B01D 46/00, B01D 46/24, B01D 50/00

(54) **FILTER UND ZYKLONFILTERSYSTEM**

(30) Priorität: 08.08.2016 DE 102016009535
(71) Anmelder: MANN + HUMMEL GMBH, 71636 Ludwigsburg (DE)
(72) Erfinder: ANTOMON, Chowalloor Rapheal, 560 058 Bangalore (IN); ARAGBATAGANGAPA ESWARAPA, Suresh, 560 022 Bangalore (IN); HC, Anil Kumar, 577301 Karnataka (IN)
(74) Vertreter: Seyboth, Matthias

(57) **Zusammenfassung**

Die Erfindung betrifft einen Filter (28) zum Entfernen von partikulären Stoffen aus einem gasförmigen Medium (12), umfassend ein Filterelement (30) mit einem Filtermedium (32), das auf ringförmige Weise um dessen Längsachse (34) angeordnet ist und eine Vorabscheiderbüchse (40), die auf dem Filterelement (30) sitzt und über mehrere Perforationen (52) verfügt. Auf einer Außenfläche (42) der Vorabscheiderbüchse (40) ist mindestens eine Leitschaufel (44) angeordnet, die sich von der Vorabscheiderbüchse (40) radial nach außen erstreckt. Die erfindungsgemäße Leitschaufel (44) ist auf schneckenförmige Weise um die Vorabscheiderbüchse (40) gewunden, um dadurch die Abscheideeffizienz der Vorabscheiderbüchse (40) weiter zu erhöhen. Die Erfindung betrifft weiterhin ein Zyklonfiltersystem mit einem vorstehend genannten Filter (28).

## Beschreibung

### Technisches Gebiet

Die Erfindung betrifft einen Filter und ein Zyklonfiltersystem mit einem solchen Filter zum Entfernen von partikulären Stoffen aus einem gasförmigen Medium, wie zum Beispiel der Ansaugluft eines Verbrennungsmotors oder der Innenbelüftung einer Kabine, insbesondere eines Kraftfahrzeugs. Der Filter umfasst ein Filterelement, das über ein Filtermedium verfügt, das auf ringförmige Weise um die Längsachse des Filterelements angeordnet ist und eine Vorabscheiderbüchse, die auf dem Filterelement sitzt und über mehrere Perforationen oder Strömungsöffnungen für das gasförmige Medium verfügt. Die Vorabscheiderbüchse verfügt über mindestens eine Leitschaufel für das gasförmige Medium, die sich von der Vorabscheiderbüchse radial nach außen erstreckt.

### Hintergrund

Ein Zyklonfiltersystem, das ein Filtergehäuse und einen vorstehend erwähnten Filter umfasst, ist aus US 2015/0068169 A1 bekannt. Die Vorabscheiderbüchse des Filters ist mit mehreren Leitschaufeln versehen, die auf genau kreisförmige Weise um die Vorabscheiderbüchse angeordnet sind. Die Leitschaufeln sind so gestaltet, dass sie das gasförmige Medium in einer spiral- oder zyklonförmigen Bewegung zur Vorabscheidung von Partikeln, die in dem gasförmigen Medium enthalten sind, um den Filter leiten, bevor dieses in das Filtermedium eintritt. Das gasförmige Medium wird bevorzugt radial oder tangential zum Filter eingeleitet und trifft auf die Leitschaufeln, die auf dem äußeren Umkreis des Vorabscheiders angeordnet sind, wodurch der Gasstrom bevorzugt einer Umlenkung und Beschleunigung unterzogen wird, was die Trennung grober Verunreinigungen, wie Schmutz- und Staubpartikel sowie Wassertropfen, von dem gasförmigen Medium zur Folge hat. Die Verunreinigungen werden insbesondere tangential nach außen geschleudert und können optional über eine Austrittsöffnung aus dem Gehäuse entfernt werden. Nachdem der Gasstrom den Vorabscheider passiert hat, wird er in das Filterelement geleitet, das in dem zylinderförmigen Vorabscheider sitzt.

### Zusammenfassung der Erfindung

Die Aufgabe der Erfindung besteht darin, einen Filter sowie ein Zyklonfiltersystem bereitzustellen, das eine weiter verbesserte Vorabscheidefähigkeit aufweist. Die Aufgabe der Erfindung in Bezug auf den Filter ist durch einen Filter nach Anspruch 1 gelöst. Das Filtersystem gemäß der Erfindung umfasst die in Anspruch 12 angegebenen Merkmale.

Erfindungsgemäß umfasst der Filter zum Entfernen von partikulären Stoffen aus einem gasförmigen Medium ein Filterelement mit einem Filtermedium, das auf ringförmige Weise um dessen Längsachse angeordnet ist. Der Filter verfügt über eine Vorabscheiderbüchse, die auf dem Filterelement sitzt und über mehrere Strömungsöffnungen oder Perforationen verfügt, wobei auf einer Außenfläche der Vorabscheiderbüchse mindestens eine Leitschaufel angeordnet ist, die sich radial von der Vorabscheiderbüchse nach außen erstreckt und die auf schneckenförmige Weise um die Vorabscheiderbüchse gewunden ist. Aufgrund der schneckenförmigen Leitschaufel kann das zu filternde gasförmige Medium in Form eines Wirbel- oder Schneckenstroms effektiver geleitet werden oder um den Filter herum und in dessen Längsrichtung an dem Filter entlang strömen, so dass partikuläre Stoffe oder Wassertropfen, die in dem gasförmigen Medium enthalten sind, effizienter aus dem gasförmigen Medium abgeschieden werden, bevor es in den Filter eintritt. Dies führt zu einer beträchtlichen Verbesserung der Lebensdauer des Filters. Weiterhin hat der erfindungsgemäße Filter keinen erhöhten Platzbedarf für die Montage und kann ohne Weiteres in Filtergehäusen vorhandener Zyklonfiltersysteme verwendet werden. Die Vorabscheiderbüchse kann mit dem Filtermedium des Filterelements in einer radialen Richtung in Kontakt kommen oder sie kann in einer radialen Richtung vom Filtermedium beabstandet sein. Die Vorabscheiderbüchse verfügt bevorzugt über eine axiale Länge, die der Länge des Filterelements entspricht oder im Wesentlichen entspricht, insbesondere eine kürzere Länge. Bevorzugt weist die schneckenförmige Leitschaufel keine Unterbrechungen, wie Lücken, Löcher, Kerben, Vertiefungen oder dergleichen auf.

Nach einer bevorzugten Ausführungsform der Erfindung verfügt die Vorabscheiderbüchse über einen nicht perforierten ersten Endabschnitt. Der nicht perforierte Endabschnitt verfügt somit nicht über Strömungsöffnungen, die sich in der Wand der Büchse befinden und kann als Eintrittsbereich oder Prallfläche für das gasförmige Medium dienen, das während der Verwendung dem Filter zugeführt wird, um zu verhindern, dass das Medium vor einer zyklonischen Vorabscheidung von Verunreinigungen in dem gasförmigen Medium direkt in den Filter eintritt. Der Strom des gasförmigen Mediums kann dadurch effektiver in eine spiralförmige Richtung um den Filter gezwungen werden, um einen Zyklonstrom unter der Führung der schneckenförmigen Schaufel zu bilden.

Während des Betriebs des Filters muss ein zirkulierender Strom des gasförmigen Mediums in umlaufender Richtung um den Filter, in anderen Worten eine fortlaufende Schleife des gasförmigen Mediums, insbesondere im Bereich des vorstehend erwähnten nicht perforierten ersten Endabschnitts der Vorabscheiderbüchse, zur wirksamen Vorabscheidung grober Verunreinigungen vor der Filterung des gasförmigen Mediums verhindert werden. Der nicht perforierte Endabschnitt der Vorabscheiderbüchse kann daher über ein Stromsperrmittel verfügen, das ein derartiges unerwünschtes wiederholtes Durchlaufen des gasförmigen Mediums in einem dichten Kreis um den Filter herum verhindert. Das Stromsperrmittel, nach einer bevorzugten Ausführungsform der Erfindung, wird durch einen Abzweig der Leitschaufel in dem nicht perforierten Endabschnitt der Büchse gebildet. Der Abzweig verfügt bevorzugt über eine gebogene Form und verläuft im Wesentlichen in axialer Richtung, um einen unerwünschten kreisenden Strom des Mediums zu sperren.

Gemäß einer bevorzugten Ausführungsform der Erfindung erstreckt sich die schneckenförmige Leitschaufel über einen Hauptabschnitt der gesamten Länge der Vorabscheiderbüchse. Dadurch kann die Gesamtlänge des Filters effektiv zur zyklonischen Vorabscheidung von Verunreinigungen aus dem gasförmigen Medium verwendet werden.

Die hohle Vorabscheiderbüchse kann aus Metall oder Metallblech hergestellt sein, optional kann auch ein Kunststoffmaterial, insbesondere ein thermoplastisches Material wie PE, das im Spritzgussverfahren verwendet wird, in Betracht gezogen werden. Dies ermöglicht eine kosteneffiziente Herstellung der Vorabscheiderbüchse mit minimaler Wanddicke, um einen maximalen Vorabscheiderspalt zwischen dem Filter und einem Filtergehäuse in einer radialen Richtung zu gewährleisten. Die schneckenförmige Schaufel ist vorteilhafterweise direkt an die Vorabscheiderbüchse angeformt.

Die erfindungsgemäße Vorabscheiderbüchse kann über einen Verstärkungsring verfügen. Dies ermöglicht eine sehr geringe Wanddicke der Vorabscheiderbüchse. Neben den damit verbundenen Kostenvorteilen, verbessert der Verstärkungsring die Stabilität des Filterelements selbst in anspruchsvollen Arbeitsumgebungen. Der Verstärkungsring ist vorteilhafterweise direkt an die Vorabscheiderbüchse angeformt, so dass keine zusätzlichen Herstellungsschritte erforderlich sind. Außerdem ermöglicht der Verstärkungsring die Verwendung eines verfügbaren Montage- oder Installationsplatzes für den Filter in einem Filtergehäuse für das Filterelement.

Gemäß einer bevorzugten Ausführungsform der Erfindung erstreckt sich die schneckenförmige Leitschaufel in Längsrichtung bis zu einem Verstärkungsring der Vorabscheiderbüchse oder sie erstreckt sich im Wesentlichen bis zu diesem. Der Verstärkungsring kann sich in einer radialen Richtung an einem Endabschnitt, der sich in einer axialen Richtung gegenüber dem nicht perforierten Endabschnitt der Vorabscheiderbüchse befindet, von der Vorabscheiderbüchse weg erstrecken.

Gemäß einer weiteren Ausführungsform der Erfindung verfügt die schneckenförmige Schaufel über einen Basisbereich, der mit der Vorabscheiderbüchse verbunden ist und sich von der Vorabscheiderbüchse in einer radialen Richtung weg erstreckt und einen gewinkelten Endbereich, der mit dem Basisbereich verbunden ist. Diese Ausführungsform ermöglicht eine weitere Beschleunigung des Stroms des gasförmigen Mediums und somit ein verbessertes Abscheidevermögen der Vorabscheiderbüchse.

Gemäß einer weiteren bevorzugten Ausführungsform der Erfindung können die Strömungsöffnungen oder Perforationen der Vorabscheiderbüchse durch die schneckenförmige Schaufel in einer radialen Richtung überdeckt sein, so dass der zu filternde einströmende Mediumgasstrom gezwungen werden kann, eine volle Umdrehung in einer axialen Richtung auszuführen, bevor er in den Filter eintritt. Dadurch kann die Vorabscheideeffizienz des Filters noch weiter erhöht werden. Der vorgenannte Endabschnitt der Leitschaufel ist bevorzugt parallel oder im Wesentlichen parallel zur Außenfläche der Vorabscheiderbüchse angeordnet.

Die schneckenförmige Schaufel verfügt bevorzugt über eine radiale Verlängerung, die mindestens 10 % des Außendurchmessers der Vorabscheiderbüchse umfasst. Dadurch wird ein unerwünschtes gerades axiales Überströmen der Leitschaufel durch das gasförmige Medium verringert.

Das erfindungsgemäße Zyklonfiltersystem dient zum Entfernen von Verunreinigungen, insbesondere partikulärer Stoffe, aus einem gasförmigen Medium. Das Zyklonfiltersystem umfasst ein Filtergehäuse, das über eine Mediumeinlassöffnung und eine Mediumauslassöffnung und einen vorstehend beschriebenen Filter verfügt, der im Filtergehäuse angeordnet ist.

Gemäß einer bevorzugten Ausführungsform des Filtersystems ist die Mediumeinlassöffnung an einer Seitenwand des Filtergehäuses angeordnet, um einen radialen oder tangentialen Strom des gasförmigen Mediums zum Filter zu ermöglichen. Falls die Vorabscheiderbüchse des Filters den vorgenannten nicht perforierten Endabschnitt aufweist, ist der Filter vorteilhaft im Inneren des Filtergehäuses angeordnet, so dass der Endabschnitt der Vorabscheiderbüchse sich neben der Einlassöffnung des Filtergehäuses befindet. Die Einlassöffnung führt somit in diesem Fall zum nicht perforierten Endabschnitt der Vorabscheiderbüchse.

Die Auslassöffnung des Filtergehäuses ist bevorzugt auf einer Endfläche des Gehäuses angeordnet, die bevorzugt an dessen Mediumeinlassöffnung angrenzt. Eine Strömungslänge des gasförmigen Mediums innerhalb des Filtergehäuses kann dadurch maximiert werden.

Gemäß einer weiteren Ausführungsform des Zyklonfiltersystems bildet das Filtergehäuse eine Schmutzkammer für partikuläre Stoffe, die aus dem gasförmigen Medium durch die Vorabscheiderbüchse abgeschieden wurden, welche in der axialen Richtung an einem gegenüberliegenden Ende der Mediumöffnung des Gehäuses angeordnet ist und die sich bevorzugt in einer radialen Richtung von diesem erstreckt. Die aus dem gasförmigen Medium abgeschiedenen Verschmutzungen können damit gelagert werden, um ein unerwünschtes Wiedereintreten der Verschmutzungen in den Strom des gasförmigen Mediums zu verhindern.

### Kurzbeschreibung der Zeichnungen

Eine umfassendere Würdigung verschiedener anderer Merkmale und zugehöriger Vorteile der vorliegenden Erfindung werden durch das bessere Verständnis derselben bei Betrachtung in Zusammenhang mit den beigefügten Zeichnungen ermöglicht, in denen die Bezugszeichen in den verschiedenen Ansichten gleiche oder ähnliche Teile bezeichnen und wobei:
- Fig. 1: eine Schnittansicht eines Zyklonfiltersystems mit einem Filter, der gemäß der vorliegenden Erfindung konfiguriert ist;
- Fig. 2: eine perspektivische Ansicht des Filters des Filtersystems nach Fig. 1 ist;
- Fig. 3: eine andere perspektivische Ansicht des Filters nach Fig. 2 ist;
- Fig. 4: ein Aufriss einer Vorabscheiderbüchse des Filters nach Fig. 2 ist
- Fig. 5: eine perspektivische Ansicht einer alternativen Ausführungsform einer Vorabscheiderbüchse für den Filter aus Fig. 1 ist;
- Fig. 6: eine perspektivische Ansicht einer weiteren Ausführungsform eines Filters ist; und
- Fig. 7: eine Schnittansicht einer weiteren Ausführungsform eines Filtersystems mit dem Filter nach Fig. 6 ist.

### Beschreibung der Offenbarung

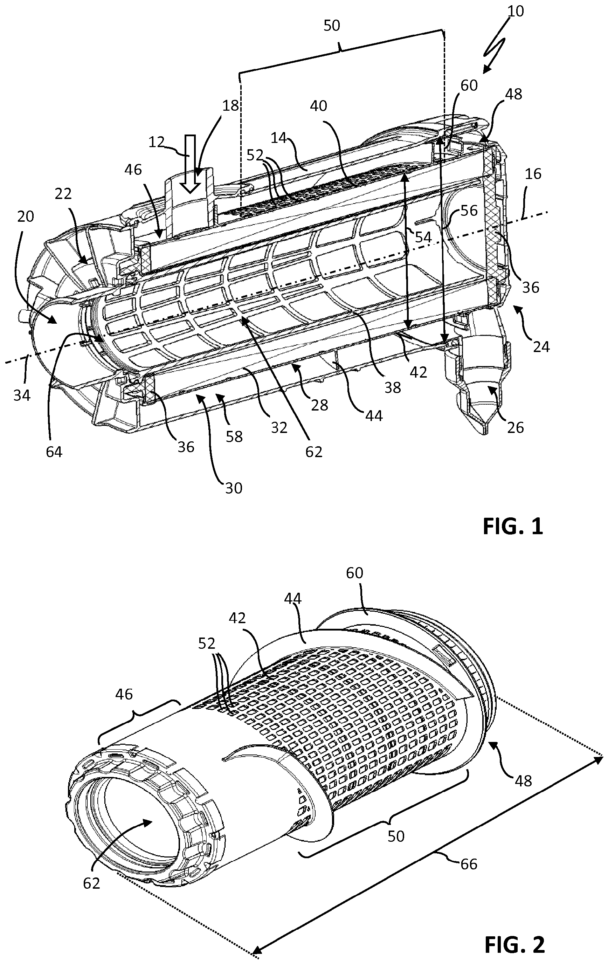

**Fig. 1** zeigt ein Zyklonfiltersystem **10** zum Reinigen eines gasförmigen Mediums **12,** d. h. die Verbrennungsluft, die den Zylindern eines Verbrennungsmotors (nicht dargestellt) zugeführt wird. Das Filtersystem 10 verfügt über ein Filtergehäuse **14,** ausgeführt als ein Zyklon, das hohl und zylinderförmig ist. Das Filtergehäuse 14 verfügt über eine Längsachse **16,** eine seitliche Einlassöffnung **18,** durch die das ungereinigte gasförmige Medium 12 radial oder tangential in das Gehäuse 14 strömt und eine axiale Mediumauslassöffnung **20,** die sich mittig an einem Ende **22** des Gehäuses 14 befindet. Das Filtergehäuse 14 bildet, bevorzugt an seinem anderen Ende **24,** eine Schmutzkammer **26** für partikuläre Stoffe oder Wassertropfen, die aus dem gasförmigen Medium 12 abgeschieden wurden, welche sich insbesondere in einer radialen Richtung von diesem erstrecken kann.

Ein Filter **28** ist im Inneren des Filtergehäuses 14 angeordnet. Der Filter 28 umfasst ein hohles zylinderförmiges Filterelement **30** mit einem Filtermedium **32,** das auf kreisförmige Weise um die Längsachse **34** des Filterelements 30 angeordnet ist. Das Filtermedium 32 kann eine Sternfaltung aufweisen, um dessen wirksame Oberfläche zu maximieren. Außerdem kann das Filtermedium 32 zwischen zwei Endplatten **36** angeordnet sein. Ein gitterförmiges Halterohr **38** zum radialen Halten des Filtermediums 32 kann bereitgestellt sein. Das Filtermedium 32 wird radial von außen nach innen vom zu filternden gasförmigen Medium 12 durchströmt.

Das Filterelement 30 sitzt in einer hohlen zylinderförmigen Vorabscheiderbüchse **40,** die auf ihrer Außenfläche **42** über mindestens eine Leitschaufel **44** für das gasförmige Medium 12 verfügt, die sich von der Vorabscheiderbüchse 40 in einer radialen Richtung nach außen erstreckt.

Die Vorabscheiderbüchse 40 erstreckt sich von einem ersten Endabschnitt **46** zu einem zweiten Endabschnitt **48** von dieser. Der erste Endabschnitt 46 dient als Prallfläche für das gasförmige Medium. Der erste Endabschnitt 46 ist nicht perforiert. Der nicht perforierte Endabschnitt 46 befindet sich direkt neben der Mediumeinlassöffnung 18 des Filtergehäuses 14, so dass einströmendes gasförmiges Medium 12 direkt gegen den nicht perforiertem Endabschnitt 46 geleitet wird. Angrenzend an den nicht perforierten Endabschnitt 46 in einer axialen Richtung, weist der Vorabscheider einen mittleren Längsabschnitt oder ein mittleres Segment **50** mit einer Vielzahl an Perforationen **52** auf. Die Perforationen 52 ermöglichen einen radialen Eintritt des gasförmigen Mediums 12 in den Filter 28.

Die Vorabscheiderbüchse 40 verfügt über einen Außendurchmesser **54,** der kleiner als der Innendurchmesser **56** des Filtergehäuses 14 ist, so dass ein ringförmiger Raum **58** zwischen der Wand des Gehäuses 14 und der Vorabscheiderbüchse 40 gebildet wird, in dem sich das einströmende, ungereinigte gasförmige Medium 12 verteilen kann. Die Vorabscheiderbüchse 40 ist bevorzugt aus Kunststoff, insbesondere aus per Spritzgussverfahren hergestelltem thermoplastischem Kunststoff, oder Metall hergestellt. Die Vorabscheiderbüchse 40 kann über mindestens einen Aussteifungs- oder Verstärkungsring **60** verfügen, der sich bevorzugt am zweiten Endabschnitt 48 gegenüber dem nicht perforierten Endabschnitt 46 befindet. Der mindestens eine Verstärkungsring 60 erstreckt sich in einer radialen Richtung von der Vorabscheiderbüchse 40 weg und ermöglicht eine minimale Materialdicke der Büchse.

Das in den ringförmigen Raum 58 eindringende Gas wird einer Verwirbelung, die durch die Leitschaufel 44 unterstützt wird, und einer Ablenkung in einer radialen Richtung zum Inneren **62** des Filterelements hin unterzogen, wobei grobe Verunreinigungen, die im gasförmigen Medium mitgeführt werden, zum Beispiel Schmutzpartikel oder Wassertropfen, tangential nach außen geschleudert und dadurch aus dem Strom des gasförmigen Mediums 12 abgeschieden werden.

Wenn das gasförmige Medium 12 weiterströmt, tritt es über die Perforationen 52, die in der Vorabscheiderbüchse 40 bereitgestellt sind, in den Filter 28 ein. Nach dem Durchströmen des Filtermediums 32 des Filterelements, wird das auf diese Weise gefilterte gasförmige Medium 12 dann axial von dem Innenraum 62 des Filterelements 30 über einen axialen Auslass **64** des Filters, der fluidisch mit der axialen Auslassöffnung 20 des Filtergehäuses 14 verbunden ist, ausgelassen. Es ist anzumerken, dass ein weiterer ringförmiger Innenraum zwischen der Vorabscheiderbüchse 40 und dem Filtermedium 32 des Filterelements 30 auf der Rohrseite des Filterelements 32 bereitgestellt sein kann. In anderen Worten: die Vorabscheiderbüchse muss nicht unbedingt direkten Kontakt mit dem Filtermedium in einer radialen Richtung aufweisen.

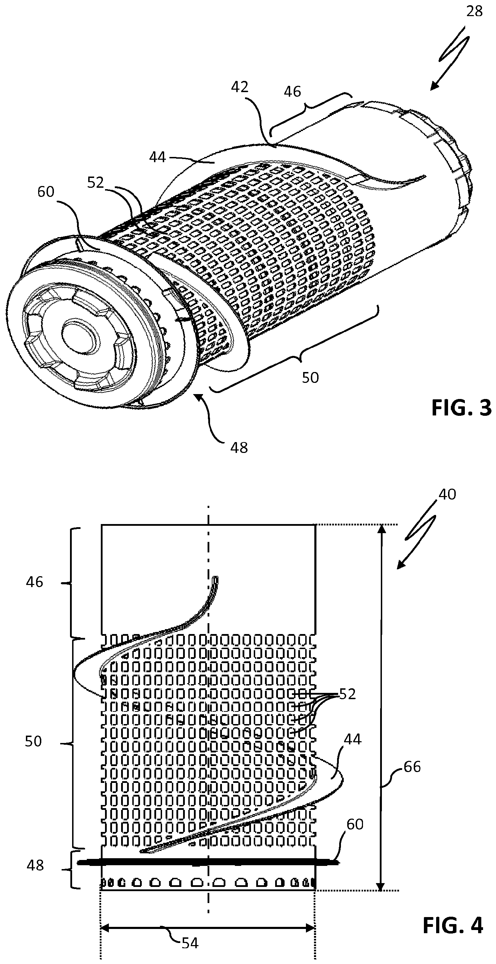

**FIG. 2** und **3** zeigen unterschiedliche perspektivische Darstellungen des Filters 28 aus der beispielhaften Ausführungsform nach FIG. 1. Die Leitschaufel 44 der Vorabscheiderbüchse 40 ist um die Vorabscheiderbüchse 40 und deren Längsachse 34 auf schneckenförmige Weise gewunden. Die schneckenförmige Leitschaufel weist bevorzugt keine Unterbrechungen, insbesondere Lücken oder Vertiefungen, auf. Die schneckenförmige Leitschaufel 44 kann sich von der Prallfläche oder dem nicht perforierten ersten Endabschnitt 46 der Vorabscheiderbüchse 40 über einen Hauptabschnitt der Gesamtlänge **66** der Vorabscheiderbüchse 40 erstrecken.

Weiterhin, in der vorliegenden Ausführungsform dargestellt in den Figuren 1 bis 3, bildet die schneckenförmige Leitschaufel 44 mehr als eine volle Drehung oder Windung auf der Vorabscheiderbüchse. Es versteht sich von selbst, dass die Leitschaufel 44 sogar zwei volle Umdrehungen oder Windungen auf der Vorabscheiderbüchse bilden kann, insbesondere abhängig von der Gesamtlänge der Büchse und dem erwarteten maximalen Durchfluss des gasförmigen Mediums bei der Verwendung des Filters. Die schneckenförmige Leitschaufel 44 erstreckt sich oder erstreckt sich im Wesentlichen in der Längsrichtung bis zum Verstärkungsring 60 der Vorabscheiderbüchse 40, die sich in einer radialen Richtung von der Vorabscheiderbüchse 40 weg erstreckt.

Wie am besten aus der Einzelabbildung der Vorabscheiderbüchse 40, die in **FIG. 4** dargestellt ist, ersichtlich wird, verfügt die schneckenförmige Leitschaufel 44 über eine radiale Verlängerung, die mindestens 10% des Außendurchmessers 54 der Vorabscheiderbüchse 40 beträgt.

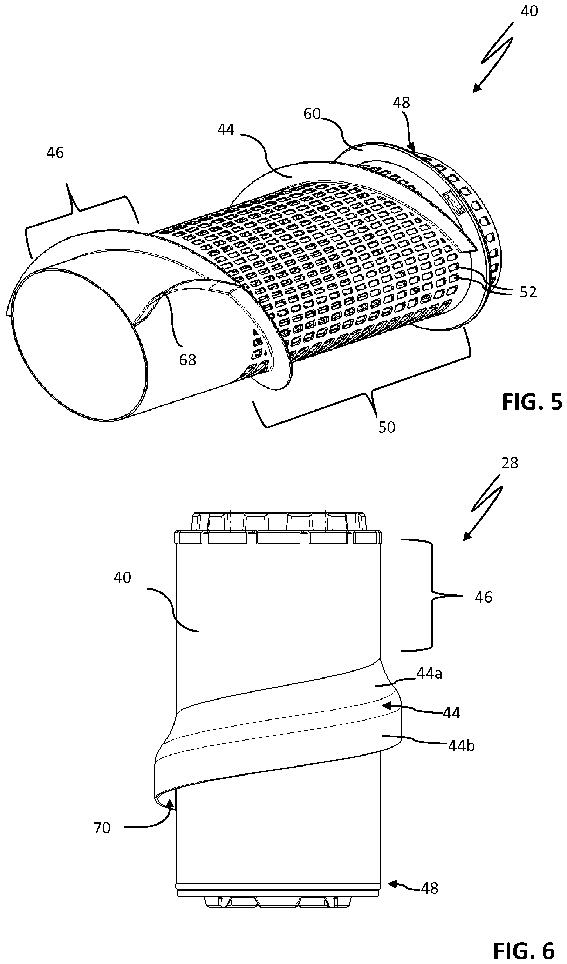

**FIG. 5** zeigt eine veränderte Ausführungsform einer Vorabscheiderbüchse 40 für den Filter 28, der in den FIG. 1 bis 3 dargestellt ist, die mit einem zusätzlichen Stromsperrmittel **68** zum Verhindern eines zirkulierenden Stroms des gasförmigen Mediums in einer umlaufenden Richtung des nicht perforierten ersten Endabschnitts 46 der Vorabscheiderbüchse 40 versehen ist. Das Stromsperrmittel 68 kann bevorzugt durch einen, insbesondere gebogenen, Abzweig der schneckenförmigen Leitschaufel 44 gebildet sein.

**FIG. 6** zeigt eine veränderte Ausführungsform des Filters 28, wobei die schneckenförmige Leitschaufel 28 einen Basisbereich **44a,** der sich in einer radialen Richtung von der Vorabscheiderbüchse 40 weg erstreckt und einen gewinkelten Endbereich **44b,** der direkt mit dem Basisbereich 44a verbunden ist, aufweist. Der gewinkelte Endbereich 44b erstreckt sich in einer axialen Richtung und ist parallel oder im Wesentlichen parallel in Bezug auf die Außenfläche 42 der Vorabscheiderbüchse 40 ausgerichtet.

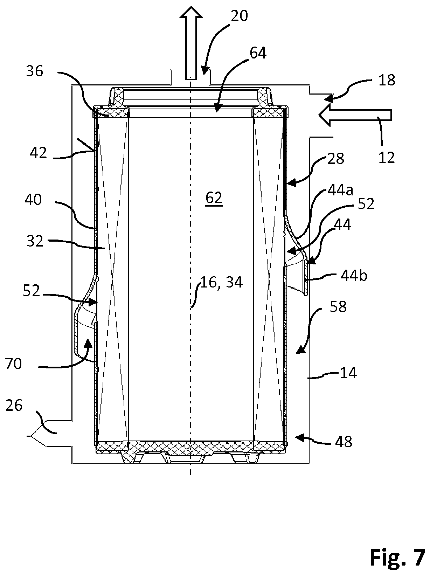

**FIG. 7** zeigt eine Schnittansicht eines weiteren Zyklonfiltersystems 10 mit einem Gehäuse 14 und dem Filter 28 aus FIG. 6, der darin angeordnet ist. Die Strömungsöffnungen oder Perforationen 52 der Vorabscheiderbüchse 40 sind eine hinter der anderen auf eine schneckenförmige Weise angeordnet, die dem dreidimensionalen Verlauf der schneckenförmigen Leitschaufel 44 entspricht. Die Strömungsöffnungen 52 sind durch die schneckenförmige Leitschaufel 44 in einer radialen Richtung überdeckt. Die schneckenförmige Leitschaufel bildet somit eine äußere radiale Seitenabdeckung für die Perforationen 52 der Vorabscheiderbüchse 40. Es ist anzumerken, dass ein gemeinsamer schneckenförmiger Einlass oder eine Öffnung **70,** die zwischen dem gewinkelten Endbereich 44b der schneckenförmigen Leitschaufel 44 und der Außenfläche 42 der Vorabscheiderbüchse 40 gebildet ist, vorhanden ist. In der abgebildeten Ausführungsform wird das gasförmige Medium 12 nicht nur verwirbelt, wenn es von der Einlassöffnung 18 des Filtergehäuses um den Filter 28 strömt, sondern es wird weiterhin in einer axialen Richtung umgelenkt, bevor es in die schneckenförmige Einlassöffnung 70 eintritt und die Perforationen 52 der Vorabscheiderbüchse 40 erreicht. Dadurch wird eine weitere Verbesserung der Vorabscheideeffizienz des Zyklonfiltersystems 10 beziehungsweise des Filters 28 erzielt.

## Patentansprüche

1. Ein Filter (28) zum Entfernen von partikulären Stoffen aus einem gasförmigen Medium (12), umfassend:
- ein Filterelement (30) mit einem Filtermedium (32), das auf ringförmige Weise um dessen Längsachse (34) angeordnet ist; und
- eine Vorabscheiderbüchse (40), die auf dem Filterelement (30) sitzt und über mehrere Perforationen (52) verfügt, wobei auf einer Außenfläche (42) der Vorabscheiderbüchse (40) mindestens eine Leitschaufel (44) angeordnet ist, die sich von der Vorabscheiderbüchse (40) radial nach außen erstreckt, **dadurch gekennzeichnet, dass** die Leitschaufel (44) auf schneckenförmige Weise um die Vorabscheiderbüchse (40) gewunden ist.

2. Der Filter nach Anspruch 1, **dadurch gekennzeichnet, dass** die Vorabscheiderbüchse (40) über einen nicht perforierten ersten Endabschnitt (46) verfügt, der als Prallfläche für das gasförmige Medium (12) dient.

3. Der Filter nach Anspruch 2, **dadurch gekennzeichnet, dass** der nicht perforierte erste Endabschnitt (46) der Vorabscheiderbüchse (40) über ein Umlaufstromsperrmittel zum Verhindern eines zirkulierenden Stroms des gasförmigen Mediums (12) in einer umlaufenden Richtung um die Vorabscheiderbüchse (40) verfügt.

4. Der Filter nach Anspruch 3, **dadurch gekennzeichnet, dass** das Stromsperrmittel durch einen, bevorzugt gebogenen, Abzweig der schneckenförmigen Leitschaufel (44) gebildet ist.

5. Der Filter nach Anspruch 1, **dadurch gekennzeichnet, dass** sich die schneckenförmige Leitschaufel (44) in einer Längsrichtung der Vorabscheiderbüchse (40) über einen Hauptabschnitt der Gesamtlänge (66) der Vorabscheiderbüchse (40) erstreckt.

6. Der Filter nach Anspruch 1, **dadurch gekennzeichnet, dass** sich die schneckenförmige Leitschaufel (44) in Längsrichtung bis zu einem Verstärkungsring (60) der Vorabscheiderbüchse (40) erstreckt oder im Wesentlichen erstreckt.

7. Der Filter nach Anspruch 6, **dadurch gekennzeichnet, dass** sich der Verstärkungsring (60) in einer radialen Richtung von der Vorabscheiderbüchse (40) weg an einem zweiten Endabschnitt (48) von diesem erstreckt.

8. Der Filter nach Anspruch 7, **dadurch gekennzeichnet, dass** die schneckenförmige Leitschaufel (44) einen Basisbereich (44a), der sich in einer radialen Richtung von der Vorabscheiderbüchse (40) weg erstreckt und einen gewinkelten Endbereich (44b), der mit dem Basisbereich (44a) verbunden ist, aufweist.

9. Der Filter nach Anspruch 8, **dadurch gekennzeichnet, dass** der Endbereich (44b) parallel oder im Wesentlichen parallel zu einer Außenfläche (42) der Vorabscheiderbüchse (40) angeordnet ist.

10. Der Filter nach Anspruch 8 oder 9, **dadurch gekennzeichnet, dass** mindestens ein Teil der Perforationen (52) der Vorabscheiderbüchse (40) durch die schneckenförmige Leitschaufel (44) in einer radialen Richtung überdeckt ist.

11. Der Filter nach einem der vorangehenden Ansprüche 1 bis 10, **dadurch gekennzeichnet, dass** die schneckenförmige Leitschaufel (44) über eine radiale Verlängerung verfügt, die mindestens 10 % des Außendurchmessers (54) der Vorabscheiderbüchse (40) umfasst.

12. Ein Zyklonfiltersystem (10) zum Entfernen von partikulären Stoffen aus einem gasförmigen Medium (12), umfassend ein Filtergehäuse (14), das über eine Mediumeinlassöffnung (18) und eine Mediumauslassöffnung (20) verfügt und einen Filter (28) nach einem der vorangehenden Ansprüche, der im Filtergehäuse (14) angeordnet ist.

13. Das Zyklonfiltersystem nach Anspruch 12, **dadurch gekennzeichnet, dass** die Mediumeinlassöffnung (18) an einer Seitenwand des Filtergehäuses (14) seitlich angeordnet ist, um einen radialen oder tangentialen Strom des gasförmigen Mediums zur Vorabscheiderbüchse (40) zu ermöglichen.

14. Das Zyklonfiltersystem nach Anspruch 12 oder 13, **dadurch gekennzeichnet, dass** die Auslassöffnung (20) des Filtergehäuses (14) axial auf einem ersten Ende (22) des Filtergehäuses (14) angeordnet ist, das bevorzugt angrenzend an dessen Mediumeinlassöffnung (18) angeordnet ist.

15. Das Zyklonfiltersystem nach Anspruch 12, **dadurch gekennzeichnet, dass** das Filtergehäuse (14) eine Schmutzkammer (26) für partikuläre Stoffe bildet, die aus dem gasförmigen Medium (12) abgeschieden wurden und die sich bevorzugt in einer radialen Richtung von diesem erstreckt.
